# EUROPEAN PATENT APPLICATION

(11) **EP 4 427 598 A1**
(43) Date of publication of application: **11.09.2024**
(21) Application number: 22889894.6
(22) Date of filing: 28.10.2022
(51) Int. Cl.: A23D 7/00, A23C 11/02, A23G 3/00, A23L 9/20

(54) **OIL-IN-WATER EMULSION**

(30) Priority: 04.11.2021 JP 2021180456
(71) Applicant: Fuji Oil Holdings Inc., Izumisano-shi, Osaka 598-8540 (JP)
(72) Inventor: JINNO, Yashiho, Izumisano-shi, Osaka 598-8540 (JP); KAIMOOK, Varakorn, Izumisano-shi, Osaka 598-8540 (JP); MATSUOKA, Mai, Izumisano-shi, Osaka 598-8540 (JP)
(74) Representative: Becker, Eberhard
(86) International application number: PCT/JP2022/040401
(87) International publication number: WO 2023/080074

(57) **Abstract**

The present invention addresses the problem of providing an oil-in-water emulsion in which the contained amounts of trans fatty acids are sufficiently reduced, but flavors such as milky sensation or a sensation of richness can be strongly felt. The problem can be solved by an oil-in-water emulsion in which a specific triglyceride is contained at a high level in a plant oil or fat even when the contained amounts of trans fatty acids with respect to lipids are at most 2 wt%, the unsaponifiable matter index determined from the fatty acid compositional makeup and the iodine value of oil and fat is at least a specific numeral value, and a diglyceride is contained at a high level.

## Description

### Technical Field

The present invention relates to an oil-in-water emulsion containing a specific oil and/or fat.

### Background Art

Fillings such as custard, flour paste, and sauce are oil-in-water emulsions. These fillings are used in various applications such as sealed filling, between-layers filling, and topping for pastry, western confectionery, and the like.

Fillings that are oil-in-water emulsion are produced by adjusting an oil phase and an aqueous phase and then homogeneously emulsifying them using a homogenizer or the like. In the oil phase of the raw materials, vegetable oils and/or fats, which are known to greatly affect the physical properties and flavor of oil-based foods, are often blended in an amount of approximately from 2 to 40 wt.%.

In recent years, the health risks of trans fatty acids in vegetable oils and/or fats have become clear, making oil-based foods with reduced trans fatty acids desirable. Specific examples of methods for reducing trans fatty acids include reducing the amount of partially hydrogenated oils that produce trans fatty acids during the processes and replacing partially hydrogenated oils with interesterified oils, extremely hydrogenated oils, or fractionated oils. Meanwhile, although these substitutes can be used in terms of physical properties, it is known that these substitutes impair the flavor of the food, specifically the so-called deliciousness such as milky taste and richness. Therefore, there is a demand for a technique that can impart deliciousness while reducing the trans fatty acid content.

In order to improve the flavor of water-in-oil emulsions, attention has been paid on the solid raw materials in the aqueous phase, and a technique using a starch decomposition product (Patent Document 1) as well as a technique using a milk protein and a milk mineral (Patent Document 2) have been proposed. Regarding the oil phase, a technique using cocoa butter components derived from cocoa beans (Patent Document 3) and a technique using a S2L type triglyceride (Patent Document 4) have been proposed.

### Citation List

### Patent Document

Patent Document 1: JP 2004-337166 A
Patent Document 2: JP 2009-195161 A
Patent Document 3: JP 2012-191929 A
Patent Document 4: JP 2012-075336 A

### Summary of Invention

### Technical Problem

Regarding the oil-in-water emulsions provided as examples in the prior art, efforts were made regarding the raw materials of the aqueous phase, but not regarding the oil phase. In this respect, there is still room for improvement. Meanwhile, the improvement of flavor by using cacao butter in the oil phase requires the use of an expensive raw material, which leads to high production cost. The use of a S2L type triglyceride results in elevated trans fatty acid content, making this approach insufficient to meet further reduction requests from users. Therefore, there is a demand for an oil-in-water emulsion that has a good flavor (milkiness or richness) despite having a reduced trans fatty acid content in a vegetable oils and/or fats in the oil phase and despite using relatively inexpensive raw materials.

### Solution to Problem

As a result of intensive studies to solve the above problems, the present inventors have unexpectedly found that in an oil-in-water emulsion consisting of an aqueous phase and an oil phase, even when the trans fatty acid content per lipid in the oil-in-water emulsion is 2 wt.% or less, the above problems can be solved by a high content of a specific triglyceride in a vegetable oils and/or fats, a specific value or higher unsaponifiable matter index obtained from the iodine value and fatty acid composition of the oil and/or fat, and a high content of a diglyceride, thus completing the present invention.

That is, the present invention includes the following inventions.
(1) An oil-in-water emulsion containing a vegetable oils and/or fats and water, a trans fatty acid content per lipid in the oil-in-water emulsion being 2 wt.% or less, and an SO2 triglyceride in the oil-in-water emulsion being 1.0 wt.% or greater. S represents stearic acid, O represents oleic acid, and SO2 triglyceride represents a triglyceride to which one S and two Os are bonded.
(2) The oil-in-water emulsion according to (1), wherein the oil-in-water emulsion contains at least 2 wt.% or greater of the vegetable oils and/or fats, and the vegetable oils and/or fats has an unsaponifiable matter index of 0.9 or greater according to the following equation.
   "Unsaponifiable Matter Index": Actual Iodine Value Measured - (C16:1% x 0.950 + C18:1% x 0.860 + C18:2% x 1.732 + C18:3% x 2.616 + C20:1% x 0.785 + C22:1% x 0.723)
(3) The oil-in-water emulsion according to (1), wherein the vegetable oils and/or fats contains 6.5 wt.% or greater of a diglyceride.
(4) The oil-in-water emulsion according to (2), wherein the vegetable oils and/or fats contains 6.5 wt.% or greater of a diglyceride.
(5) The oil-in-water emulsion according to (1), wherein the vegetable oils and/or fats does not contain a partially hydrogenated oil.
(6) The oil-in-water emulsion according to (2), wherein the vegetable oils and/or fats does not contain a partially hydrogenated oil.
(7) The oil-in-water emulsion according to (3), wherein the vegetable oils and/or fats does not contain a partially hydrogenated oil.
(8) The oil-in-water emulsion according to (4), wherein the vegetable oils and/or fats does not contain a partially hydrogenated oil.
(9) The oil-in-water emulsion according to (5), wherein the vegetable oils and/or fats contains a low melting point fraction obtained by fractionation of shea butter.
(10) The oil-in-water emulsion according to (6), wherein the vegetable oils and/or fats contains a low melting point fraction obtained by fractionation of shea butter.
(11) The oil-in-water emulsion according to (7), wherein the vegetable oils and/or fats contains a low melting point fraction obtained by fractionation of shea butter.
(12) The oil-in-water emulsion according to (8), wherein the vegetable oils and/or fats contains a low melting point fraction obtained by fractionation of shea butter.
(13) The oil-in-water emulsion according to any one of (1) to (12), wherein the oil-in-water emulsion is a filling or a cream.
(14) A method for enhancing a flavor (milkiness or richness) of an oil-in-water emulsion, the method including, in an oil-in-water emulsion containing a vegetable oils and/or fats and water, setting a trans fatty acid content in the vegetable oils and/or fats to 2 wt.% or less, and setting an SO2 triglyceride in the oil-in-water emulsion to 1.0 wt.% or greater.
(15) The method according to (14), wherein the oil-in-water emulsion contains at least 2 wt.% or greater of the vegetable oils and/or fats, and the vegetable oils and/or fats has an unsaponifiable matter index of 0.9 or greater according to the following equation.
   "Unsaponifiable Matter Index": Actual Iodine Value Measured - (C16:1% x 0.950 + C18:1% x 0.860 + C18:2% x 1.732 + C18:3% x 2.616 + C20:1% x 0.785 + C22:1% x 0.723)
(16) The method according to (14), wherein the vegetable oils and/or fats has a diglyceride content of 6.5 wt.% or greater.
(17) The method according to (15), wherein the vegetable oils and/or fats has a diglyceride content of 6.5 wt.% or greater.
(18) The method according to (14), wherein the vegetable oils and/or fats is free of a partially hydrogenated oil.
(19) The method according to (15), wherein the vegetable oils and/or fats is free of a partially hydrogenated oil.
(20) The method according to (16), wherein the vegetable oils and/or fats is free of a partially hydrogenated oil.
(21) The method according to (17), wherein the vegetable oils and/or fats is free of a partially hydrogenated oil.
(22) The method according to any one of (14) to (21), wherein the vegetable oils and/or fats contains a low melting point fraction obtained by fractionation of shea butter.

### Advantageous Effects of Invention

The present invention can provide an oil-in-water emulsion that can have a strong flavor (milkiness or richness) without being limited to certain flavors such as cheese, milk, chocolate, and custard, despite the oil-in-water emulsion having a sufficiently reduced trans fatty acid content.

### Description of Embodiments

The present invention will be described in detail below.

### Vegetable oils and/or fats

In an embodiment of the present invention, specific examples of the vegetable oils and/or fats contained in the oil-in-water emulsion include: palm oil, rapeseed oil, soybean oil, sunflower seed oil, cottonseed oil, peanut oil, rice bran oil, corn oil, safflower oil, olive oil, kapok oil, sesame oil, evening primrose oil, palm kernel oil, coconut oil, medium-chain triglycerides (MCT), shea butter, sal fat, and algae oil; processed oils and/or fats such as extremely-hydrogenated oils, fractionated oils, and interesterified oils of the foregoing; and mixed oils and/or fats of the foregoing. The properties of the oils and/or fats are not limited, and either solid fats or liquid oils and/or fats can be used.

In the present specification, an extremely-hydrogenated oil is defined as an oil and/or fat that has been hydrogenated to an iodine value (IV) of 4 or less, while a partially hydrogenated oil is defined as an oil and/or fat with an iodine value (IV) greater than 4 after hydrogenation, the iodine value (IV) serving as an indicator of the degree of unsaturation.

In an embodiment of the present invention, the vegetable oils and/or fats is preferably used in the oil-in-water emulsion in an amount of at least 2 wt.% or greater, more preferably 5 wt.% or greater, even more preferably 10 wt.% or greater, and most preferably 20 wt.% or greater.

### Trans Fatty Acid Content

In an embodiment of the present invention, the trans fatty acid content in the vegetable oils and/or fats contained in the oil-in-water emulsion is preferably 2 wt.% or less, more preferably 1.5 wt.% or less, even more preferably 1 wt.% or less, and most preferably 0.8 wt.% or less.

In addition, the trans fatty acid content per lipid in the oil-in-water emulsion is 2 wt.% or less, preferably 1.5 wt.% or less, and more preferably 1.2 wt.% or less. Here, the trans fatty acid content per lipid in the oil-in-water emulsion includes trans fatty acids derived from oil-soluble components other than the vegetable oils and/or fats.

### SO2 Triglyceride Content

The SO2 triglyceride content of the vegetable oils and/or fats contained in the oil-in-water emulsion is preferably 3.0 wt.% or greater, more preferably from 3.5 to 10.0 wt.%, even more preferably from 3.8 to 8.0 wt.%, and most preferably from 4.0 to 6.0 wt.% or less. With the SO2 triglyceride content of the vegetable oils and/or fats contained in the oil-in-water emulsion being 3.0 wt. % or greater, the oil-in-water emulsion has a strong flavor indicated by milkiness or richness when the vegetable oils and/or fats is used in the oil-in-water emulsion, which is preferable. When the SO2 triglyceride content is less than 3.0 wt.%, flavor intensity may not be sufficiently achieved.

Further, the SO2 triglyceride content contained in the oil-in-water emulsion is 1.0 wt.% or greater, preferably from 1.0 to 3.5 wt.%, more preferably from 1.05 to 3.0 wt.%, and even more preferably from 1.1 to 2.5 wt.%. With the SO2 triglyceride content contained in the oil-in-water emulsion being 1.0 wt.% or greater, the oil-in-water emulsion has a strong flavor indicated by milkiness or richness when the vegetable oils and/or fats is used in the oil-in-water emulsion, which is preferable. When the SO2 triglyceride content is less than 1.0 wt.%, flavor intensity may not be sufficiently achieved.

In an embodiment of the present invention, an oil and/or fat to be used as the vegetable oils and/or fats contained in the oil-in-water emulsion is not limited as long as the above-described configuration is satisfied, but the oil and/or fat to be used is preferably a mixture of an oil and/or fat component X and an oil and/or fat component Y below.
- The oil and/or fat component X is an oil and/or fat containing palm oil as a raw material
- The oil and/or fat component Y is a low melting point fraction obtained by mixing high oleic sunflower oil and fatty acids, performing interesterification using a lipase, and performing steam distillation and fractionation, or a low melting point fraction obtained by fractionation of shea butter

The oil and/or fat component X, which is a vegetable oils and/or fats contained in the oil-in-water emulsion, is preferably used in a range of from 2 to 50 wt.%, more preferably from 5 to 45 wt.%, even more preferably from 10 to 40 wt.%, and most preferably from 15 to 35 wt.% with respect to the entire oil-in-water emulsion. As the oil and/or fat component X, palm oil subjected to one or more processes selected from fractionation, hydrogenation, and interesterification can also be used, and one or more of these oils and/or fats can be used.

The oil and/or fat component Y, which is a vegetable oils and/or fats contained in the oil-in-water emulsion, is preferably used in a range of from 0.5 to 10 wt.%, more preferably from 1 to 8 wt.%, and even more preferably from 1 to 6 wt.% with respect to the entire oil-in-water emulsion. With the oil and/or fat component Y which the vegetable oils and/or fats contained in the oil-in-water emulsion being used in a range of 0.5 to 10 wt.% with respect to the entire oil-in-water emulsion, the oil-in-water emulsion has a strong flavor indicated by milkiness or richness when the vegetable oils and/or fats is used in the oil-in-water emulsion, which is preferable. When the oil and/or fat component Y used is less than 0.5 wt.%, flavor intensity may not be sufficiently achieved, and meanwhile, when the oil and/or fat component Y used exceeds 10 wt.%, the flavor elements may be out of balance.

In an embodiment of the present invention, the vegetable oils and/or fats contained in the oil-in-water emulsion is more preferably a mixture of an oil and/or fat component X1, an oil and/or fat component X2, and an oil and/or fat component Y below.
- The oil and/or fat component X1 is palm oil that has not been specially processed
- The oil and/or fat component X2 is a low melting point fraction obtained by fractionating palm
- The oil and/or fat component Y is a low melting point fraction obtained by fractionation of shea butter

The oil and/or fat component X1, which is a vegetable oils and/or fats contained in the oil-in-water emulsion, is preferably used in a range of from 2 to 30 wt.%, more preferably from 3 to 25 wt.%, even more preferably from 5 to 22 wt.%, and most preferably from 8 to 20 wt.% with respect to the entire oil-in-water emulsion.

The oil and/or fat component X2, which is a vegetable oils and/or fats contained in the oil-in-water emulsion, is a low melting point fraction obtained by fractionating palm, and preferably has an iodine value of 65 or greater. In addition, the oil and/or fat component X2, which is a vegetable oils and/or fats contained in the oil-in-water emulsion, is preferably used in a range of 25 wt.% or less, more preferably from 2 to 22 wt.%, even more preferably from 5 to 20 wt.%, and most preferably from 7 to 17 wt.% with respect to the entire oil-in-water emulsion.

The oil and/or fat component Y, which is a vegetable oils and/or fats contained in the oil-in-water emulsion, is a low melting point fraction obtained by fractionation of shea butter, and preferably has an iodine value of from 50 to 80. In addition, the oil and/or fat component Y, which is a vegetable oils and/or fats contained in the oil-in-water emulsion, is preferably used in a range of from 0.5 to 10 wt.%, more preferably from 1 to 8 wt.%, and even more preferably from 1 to 6 wt.% with respect to the entire oil-in-water emulsion. With the oil and/or fat component Y which the vegetable oils and/or fats contained in the oil-in-water emulsion being used in a range of 0.5 to 10 wt.% with respect to the entire oil-in-water emulsion, the oil-in-water emulsion has a strong flavor indicated by milkiness or richness when the vegetable oils and/or fats is used in the oil-in-water emulsion, which is preferable. When the oil and/or fat component Y used is less than 0.5 wt.%, flavor intensity may not be sufficiently achieved, and meanwhile, when the oil and/or fat component Y used exceeds 10 wt.%, the flavor elements may be out of balance.

### Unsaponifiable Matter Index

In the present specification, the following equation defines "unsaponifiable matter index". "Unsaponifiable Matter Index": Actual Iodine Value Measured - (C16:1% x 0.950 + C18:1% x 0.860 + C18:2% x 1.732 + C18:3% x 2.616 + C20:1% x 0.785 + C22:1% x 0.723)

The "unsaponifiable matter index" is an index obtained from the difference between all double bonds in an oil and/or fat and the equivalent of double bonds derived from fatty acids, and is considered to reflect the content of unsaponifiable components (unsaponifiable matter) in the oil and/or fat. The equivalent of double bonds derived from fatty acids was set in accordance with AOCS Recommended Practice Cd 1c-85. The amount of all double bonds in the oil and/or fat was determined based on the actual iodine value measured.

The unsaponifiable matter index of the vegetable oils and/or fats contained in the oil-in-water emulsion is preferably 0.9 or greater, more preferably 0.95 or greater, even more preferably 1 or greater, further preferably 1.1 or greater, and most preferably 1.2 or greater. With the unsaponifiable matter index of the vegetable oils and/or fats contained in the oil-in-water emulsion being 0.9 or greater, the oil-in-water emulsion has a strong flavor indicated by milkiness or richness when the vegetable oils and/or fats is used in the oil-in-water emulsion, which is preferable. When the unsaponifiable matter index is less than 0.9, flavor intensity may not be sufficiently achieved.

### Diglyceride

The diglyceride content of the vegetable oils and/or fats contained in the oil-in-water emulsion is preferably from 6.5 to 15 wt.%, more preferably from 6.7 to 14 wt.%, and even more preferably from 6.9 to 13 wt.%. With the diglyceride content of the vegetable oils and/or fats contained in the oil-in-water emulsion being from 6.5 to 15 wt.%, the oil-in-water emulsion has a strong flavor indicated by milkiness or richness when the vegetable oils and/or fats is used in the oil-in-water emulsion, which is preferable. When the diglyceride content is less than 6.5 wt.%, flavor intensity may not be sufficiently achieved, and meanwhile, when the diglyceride content exceeds 15 wt.%, the flavor elements may be out of balance.

### Oil-in-Water Emulsion

The oil-in-water emulsion in an embodiment of the present invention is prepared by stirring and mixing an oil phase containing an oil and/or fat and an oil-soluble component and an aqueous phase containing water, protein, and another water-soluble component, pre-emulsifying the mixture, and then subjecting the resulting product to processes such as homogenization treatment, sterilization treatment, and cooling, similar to the case of preparing commonly known fillings such as custard, flour paste, and sauce, as well as creams such as whipped cream, culinary cream, beverage cream, and kneaded cream. A process of adding a fermentation liquid of lactic acid bacteria or the like may be also added after the sterilization treatment when necessary.

### Examples

The present invention will be specifically described with examples below. Numerical values are expressed on a weight basis unless otherwise specified.

### Measurement Method of Fatty Acid Composition

The constituent fatty acid composition of the oil and/or fat was measured in accordance with Standard Methods for Analysis of Fats, Oils and Related Materials 2.4.2.1-2013.

### Measurement Method of Diglyceride and Triglyceride (TG) Compositions

The diglyceride and triglyceride (TG) compositions of the oil and/or fat were measured by high performance liquid chromatography in accordance with Standard Methods for Analysis of Fats, Oils and Related Materials 2.4.6.2-2013. The measurement was carried out under conditions using an ODS column at a column temperature of 25°C, an eluent of acetone/acetonitrile (80/20) at a liquid volume of 0.9 mL/min, and a differential refractometer as a detector. Identification and quantification of diglyceride and triglyceride molecular species were performed based on the measurement results of known refined palm oil and palm super olein.

### Measurement Method of Iodine Value

The iodine value of the oil and/or fat was determined in accordance with Standard Methods for Analysis of Fats, Oils and Related Materials 2.3.4.1-2013.

### SO2 Type Triglyceride-Containing Oil And/or Fat

30 parts of high oleic sunflower oil and 70 parts of stearic acid were interesterified using a lipase having a 1,3-position specificity. Then, components other than triglyceride were removed by steam distillation. The resulting product was fractionated with hexane, resulting in a low melting fraction. The low melting fraction was decolorized and deodorized by a commonly known method, resulting in an SO2 type triglyceride-containing oil and/or fat. The SO2 triglyceride content of the SO2 type triglyceride-containing oil and/or fat was 51.6% as determined by high performance liquid chromatography. This was Production Example 1.

### Shea Butter Fractionated Oil And/or Fat

20 parts of shea butter and 80 parts of acetone were mixed and stirred at 27.5°C for 30 minutes to precipitate a gummy substance. Thereafter, the product was allowed to stand, and the gummy substance that had settled was filtered, resulting in a degummed shea butter. Next, the degummed shea butter and acetone were mixed to give a ratio of 18.5 parts of degummed shea butter and 81.5 parts of acetone. The temperature was gradually lowered while weak stirring was applied. After reaching 2.5°C, the temperature was held at a constant temperature for about 30 minutes, and the resulting mixed liquid was filtered to give a liquid portion (shea olein) and a solid portion (shea stearin).

The liquid portion, shea olein, was decolored and deodorized by a commonly known method, resulting in purified shea olein. This was Production Example 2.

The solid portion, shea stearin, was decolorized and deodorized by a commonly known method, resulting in purified shea stearin. This was Production Example 3.

### Partially Hydrogenated Oil Using Palm Oil and Rapeseed as Raw Materials

75 parts of rapeseed oil and 25 parts of palm super olein (having an iodine value of 68) were mixed and hydrogenated using a nickel catalyst for hydrogenation. The resulting product was then decolorized and deodorized by a commonly known method, resulting in a partially hydrogenated oil using palm oil and rapeseed as raw materials and having an iodine value of 70 and a melting point of 31°C. This was Production Example 4.

Vegetable oils and/or fats A to G were adjusted using Production Examples 1 to 4, refined palm oil (available from Fuji Oil Co., Ltd.), and palm super olein (available from Fuji Oil Co., Ltd.) in accordance with Table 1 below. The iodine values, diglyceride percentages, triglyceride composition percentages (only representative components) and fatty acid composition percentages of the vegetable oils and/or fats A to G are presented below.

Note that, since Production Example 4 used in Comparative Example 2 is a partially hydrogenated oil, it is not appropriate to obtain the diglyceride content and triglyceride composition thereof by high performance liquid chromatography, and thus numerical values are not listed.

**[Table 1]**

| | | Vegetable oils and/or fats A | Vegetable oils and/or fats B | Vegetable oils and/or fats C | Vegetable oils and/or fats D | Vegetable oils and/or fats E | Vegetable oils and/or fats F | Vegetable oils and/or fats G |
|---|---|---|---|---|---|---|---|---|
| wt.% | Refined Palm Oil | 50.9 | 50.9 | 50.9 | 50.9 | 50.9 | 50.9 | 50.9 |
| | Palm Super Olein | 43.6 | 43.6 | 43.6 | 43.6 | 43.6 | 43.6 | 49.1 |
| | Production Example 1 | 5.5 | 0.0 | 5.0 | 0.0 | 0.0 | 0.0 | 0.0 |
| | Production Example 2 | 0.0 | 5.5 | 0.0 | 5.0 | 0.0 | 0.0 | 0.0 |
| | Production Example 3 | 0.0 | 0.0 | 0.5 | 0.5 | 5.5 | 0.0 | 0.0 |
| | Production Example 4 | 0.0 | 0.0 | 0.0 | 0.0 | 0.0 | 5.5 | 0.0 |
| | Total | 100.0 | 100.0 | 100.0 | 100.0 | 100.0 | 100.0 | 100.0 |
| Diglyceride % | | 6.15 | 7.09 | 6.14 | 7.00 | 6.05 | - | 6.34 |
| TG Composition % | OOO | 5.2 | 5.3 | 5.2 | 5.2 | 4.8 | - | 5.1 |
| | SOL | 0.5 | 0.4 | 0.5 | 0.4 | 0.0 | - | 0.0 |
| | SO2 | 5.4 | 4.6 | 5.2 | 4.4 | 2.9 | - | 2.8 |
| | S2L | 0.3 | 0.2 | 0.4 | 0.2 | 0.5 | - | 0.1 |
| | S2O | 0.6 | 0.7 | 0.9 | 1.0 | 4.1 | - | 0.4 |
| | SSS | 0.0 | 0.0 | 0.0 | 0.0 | 0.1 | - | 0.0 |
| Fatty Acid Composition % | C12:0 | 0.2 | 0.2 | 0.2 | 0.2 | 0.2 | 0.3 | 0.2 |
| | C14:0 | 0.9 | 0.9 | 0.9 | 0.9 | 0.9 | 1.0 | 1.0 |
| | C14:1 | 0.0 | 0.0 | 0.0 | 0.0 | 0.0 | 0.0 | 0.0 |
| | C16:0 | 36.6 | 36.6 | 36.6 | 36.6 | 36.5 | 37.0 | 38.1 |
| | C16:1 | 0.2 | 0.2 | 0.2 | 0.2 | 0.2 | 0.2 | 0.2 |
| | C18:0 | 5.4 | 5.4 | 5.6 | 5.6 | 7.0 | 4.3 | 3.9 |
| | C18:1t | 0.2 | 0.1 | 0.2 | 0.1 | 0.2 | 1.8 | 0.2 |
| | C18:1c | 44.3 | 44.1 | 44.1 | 44.0 | 42.9 | 43.5 | 43.8 |
| | C18:2t | 0.4 | 0.4 | 0.4 | 0.4 | 0.4 | 0.5 | 0.4 |
| | C18:2c | 11.0 | 11.1 | 11.0 | 11.1 | 10.8 | 10.8 | 11.4 |
| | C18:3t | 0.0 | 0.0 | 0.0 | 0.0 | 0.0 | 0.0 | 0.0 |
| | C18:3c | 0.2 | 0.2 | 0.2 | 0.2 | 0.2 | 0.2 | 0.2 |
| | C20:0 | 0.3 | 0.4 | 0.4 | 0.4 | 0.4 | 0.4 | 0.4 |
| | C20:1 | 0.2 | 0.2 | 0.2 | 0.2 | 0.2 | 0.2 | 0.2 |
| | C22:0 | 0.0 | 0.0 | 0.0 | 0.0 | 0.0 | 0.0 | 0.0 |
| | C22:1 | 0.0 | 0.0 | 0.0 | 0.0 | 0.0 | 0.0 | 0.0 |
| | Total | 100.0 | 100.0 | 100.0 | 100.0 | 100.0 | 100.0 | 100.0 |
| Trans Fatty Acid % | | 0.6 | 0.6 | 0.6 | 0.6 | 0.6 | 2.3 | 0.6 |
| Iodine Value | | 60.1 | 60.4 | 59.9 | 60.2 | 58.5 | 60.3 | 60.4 |
| Unsaponifiable Matter Index | 1.28 | 1.48 | 1.27 | 1.45 | 1.17 | 1.00 | 1.17 | |

| | | | | | | | | |
|---|---|---|---|---|---|---|---|---|
| • OOO: Triglyceride in which three oleic acids are bonded • SOL: Triglyceride in which one stearic acid, one oleic acid, and one linoleic acid are bonded • SO2: Triglyceride in which one stearic acid and two oleic acids are bonded • S2L: Triglyceride in which two stearic acids and one linoleic acid are bonded • S2O: Triglyceride in which two stearic acids and one oleic acid are bonded • SSS: Triglyceride in which three stearic acids are bonded | | | | | | | | |

### Preparation of Oil-in-Water Emulsion

Oil-in-water emulsions (Examples 1 to 4, Comparative Examples 1 to 3) were prepared, each containing 27.5 wt.% of each the vegetable oils and/or fats A to G prepared in the previous section. The oil content in each of these oil-in-water emulsions was 32.8 wt.%. The oil-in-water emulsions were all subjected to the following evaluations (1) to (5). Table 2 presents the formulations and evaluation results of the oil-in-water emulsions.
(1) Trans fatty acid content percentage per lipid in oil-in-water emulsion
(2) SO2 triglyceride content percentage contained in oil-in-water emulsion
(3) Unsaponifiable matter index of vegetable oils and/or fats
(4) Diglyceride content percentage contained in vegetable oils and/or fats
(5) Flavor of oil-in-water emulsion. Five experienced panelists gave scores from 1 to 5 according to the following evaluation criteria, and the final evaluation was made by consensus. The equivalent of Example 1 was used as a baseline, and a score of 3 or more was considered a pass.
   - 5 points: The oil-in-water emulsion has a very strong flavor (milkiness or richness).
   - 4 points: The oil-in-water emulsion has a strong flavor (milkiness or richness).
   - 3 points: The oil-in-water emulsion has a somewhat strong flavor (milkiness or richness).
   - 2 points: The oil-in-water emulsion has a slight flavor (milkiness or richness).
   - 1 point: The oil-in-water emulsion barely has a flavor (milkiness or richness).

**[Table 2]**

| | | Example 1 | Example 2 | Example 3 | Example 4 | Comparative Example 1 | Comparative Example 2 | Comparative Example 3 |
|---|---|---|---|---|---|---|---|---|
| wt.% | Vegetable oils and/or fats A | 27.5 | | | | | | |
| | Vegetable oils and/or fats B | | 27.5 | | | | | |
| | Vegetable oils and/or fats C | | | 27.5 | | | | |
| | Vegetable oils and/or fats D | | | | 27.5 | | | |
| | Vegetable oils and/or fats E | | | | | 27.5 | | |
| | Vegetable oils and/or fats F | | | | | | 27.5 | |
| | Vegetable oils and/or fats G | | | | | | | 27.5 |
| | Natural Cheese | 5.2 | 5.2 | 5.2 | 5.2 | 5.2 | 5.2 | 5.2 |
| | Egg Yolk | 3.0 | 3.0 | 3.0 | 3.0 | 3.0 | 3.0 | 3.0 |
| | Skimmed Milk Powder | 5.6 | 5.6 | 5.6 | 5.6 | 5.6 | 5.6 | 5.6 |
| | Milk Protein | 2.4 | 2.4 | 2.4 | 2.4 | 2.4 | 2.4 | 2.4 |
| | Cream | 2.0 | 2.0 | 2.0 | 2.0 | 2.0 | 2.0 | 2.0 |
| | Sugar | 1.4 | 1.4 | 1.4 | 1.4 | 1.4 | 1.4 | 1.4 |
| | Starch | 1.4 | 1.4 | 1.4 | 1.4 | 1.4 | 1.4 | 1.4 |
| | Butter Oil | 0.7 | 0.7 | 0.7 | 0.7 | 0.7 | 0.7 | 0.7 |
| | Whole Milk Powder | 0.7 | 0.7 | 0.7 | 0.7 | 0.7 | 0.7 | 0.7 |
| | Water | 49.4 | 49.4 | 49.4 | 49.4 | 49.4 | 49.4 | 49.4 |
| | Flavor | 0.4 | 0.4 | 0.4 | 0.4 | 0.4 | 0.4 | 0.4 |
| | Stabilizer | 0.2 | 0.2 | 0.2 | 0.2 | 0.2 | 0.2 | 0.2 |
| | pH Adjusting Agent | 0.1 | 0.1 | 0.1 | 0.1 | 0.1 | 0.1 | 0.1 |
| | Total | 100.0 | 100.0 | 100.0 | 100.0 | 100.0 | 100.0 | 100.0 |
| | | | | | | | | |
| (1) Trans Fatty Acid Content per Lipid in Oil-In-Water Emulsion | | 1.0 | 1.0 | 1.0 | 1.0 | 1.0 | 2.4 | 1.0 |
| (2) SO2 Triglyceride Content Contained in Oil-In-Water Emulsion | | 1.5 | 1.3 | 1.4 | 1.2 | 0.8 | - | 0.8 |
| (3) Unsaponifiable Matter Index of Vegetable oils and/or fats | | 1.28 | 1.48 | 1.27 | 1.45 | 1.17 | 1.00 | 1.17 |
| (4) Diglyceride Content Contained in Oil-In-Water Emulsion | | 6.15 | 7.09 | 6.14 | 7.00 | 6.05 | - | 6.34 |
| (5) Flavor of Oil-in-Water Emulsion | | 3 | 5 | 3 | 4 | 1 | 4 | 2 |

### Discussions of Table 2

- The oil-in-water emulsions of Examples 1 to 4 each had preferable values in all of (1) to (4) and a good score of 3 points or more in the flavor evaluation (5). In particular, Example 2 and Example 4 had even more preferable values of (3) and (4) than those in Example 1 and Example 3. As such, the oil-in-water emulsions of Example 2 and Example 4 both had even better scores of 4 points or more in the flavor evaluation (5).
- Comparative Example 1 and Comparative Example 3 satisfied the criterion (1), but did not have preferable values in any of the criteria (2) to (4). As such, the flavor evaluations of these oil-in-water emulsions were 2 points or less, which were below the passing standard.
- Comparative Example 2 had a flavor evaluation score of 3 points or more, which was a passing score, but did not have a preferable value of (1). Since the present invention aims to solve the problems by using a vegetable oils and/or fats having a low trans fatty acid content, and vegetable oils and/or fats contain partially hydrogenated oils, it can be said that Comparative Example 2 is not suitable for solving the problems.

### Industrial Applicability

According to an embodiment of the present invention, an oil-in-water emulsion that has a good flavor despite having a reduced trans fatty acid content in a vegetable oils and/or fats in the oil phase and despite using relatively inexpensive raw materials can be suitably used.

## Claims

1. An oil-in-water emulsion comprising vegetable oils and/or fats and water, a trans fatty acid content per lipid in the oil-in-water emulsion being 2 wt.% or less, and an SO2 triglyceride in the oil-in-water emulsion being 1.0 wt.% or greater, where S represents stearic acid, O represents oleic acid, and SO2 triglyceride represents a triglyceride to which one S and two Os are bonded.

2. The oil-in-water emulsion according to claim 1, wherein the oil-in-water emulsion comprises at least 2 wt.% or greater of the vegetable oils and/or fats, and the vegetable oils and/or fats has an unsaponifiable matter index of 0.9 or greater according to the following equation:
"unsaponifiable matter index": actual iodine value measured - (C16:1% x 0.950 + C18:1% x 0.860 + C18:2% x 1.732 + C18:3% x 2.616 + C20:1% x 0.785 + C22:1% x 0.723).

3. The oil-in-water emulsion according to claim 1, wherein the vegetable oils and/or fats comprises 6.5 wt.% or greater of a diglyceride.

4. The oil-in-water emulsion according to claim 2, wherein the vegetable oils and/or fats comprises 6.5 wt.% or greater of a diglyceride.

5. The oil-in-water emulsion according to claim 1, wherein the vegetable oils and/or fats is free of a partially hydrogenated oil.

6. The oil-in-water emulsion according to claim 2, wherein the vegetable oils and/or fats is free of a partially hydrogenated oil.

7. The oil-in-water emulsion according to claim 3, wherein the vegetable oils and/or fats is free of a partially hydrogenated oil.

8. The oil-in-water emulsion according to claim 4, wherein the vegetable oils and/or fats is free of a partially hydrogenated oil.

9. The oil-in-water emulsion according to claim 5, wherein the vegetable oils and/or fats comprises a low melting point fraction obtained by fractionation of shea butter.

10. The oil-in-water emulsion according to claim 6, wherein the vegetable oils and/or fats comprises a low melting point fraction obtained by fractionation of shea butter.

11. The oil-in-water emulsion according to claim 7, wherein the vegetable oils and/or fats comprises a low melting point fraction obtained by fractionation of shea butter.

12. The oil-in-water emulsion according to claim 8, wherein the vegetable oils and/or fats comprises a low melting point fraction obtained by fractionation of shea butter.

13. The oil-in-water emulsion according to any one of claims 1 to 12, wherein the oil-in-water emulsion is a filling or a cream.

14. A method for enhancing a flavor (milkiness or richness) of an oil-in-water emulsion, the method comprising, in an oil-in-water emulsion containing a vegetable oils and/or fats and water, setting a trans fatty acid content in the vegetable oils and/or fats to 2 wt.% or less, and setting an SO2 triglyceride in the oil-in-water emulsion to 1.0 wt.% or greater.

15. The method according to claim 14, wherein the oil-in-water emulsion contains at least 2 wt.% or greater of the vegetable oils and/or fats, and the vegetable oils and/or fats has an unsaponifiable matter index of 0.9 or greater according to the following equation:
"unsaponifiable matter index": actual iodine value measured - (C16:1% x 0.950 + C18:1% x 0.860 + C18:2% x 1.732 + C18:3% x 2.616 + C20:1% x 0.785 + C22:1% x 0.723).

16. The method according to claim 14, wherein the vegetable oils and/or fats has a diglyceride content of 6.5 wt.% or greater.

17. The method according to claim 15, wherein the vegetable oils and/or fats has a diglyceride content of 6.5 wt.% or greater.

18. The method according to claim 14, wherein the vegetable oils and/or fats is free of a partially hydrogenated oil.

19. The method according to claim 15, wherein the vegetable oils and/or fats is free of a partially hydrogenated oil.

20. The method according to claim 16, wherein the vegetable oils and/or fats is free of a partially hydrogenated oil.

21. The method according to claim 17, wherein the vegetable oils and/or fats is free of a partially hydrogenated oil.

22. The method according to any one of claims 14 to 21, wherein the vegetable oils and/or fats contains a low melting point fraction obtained by fractionation of shea butter.
